# EUROPEAN PATENT SPECIFICATION

(11) **EP 2 185 474 B1**
(45) Date of publication and mention of the grant of the patent: **09.02.2011**
(21) Application number: 08785254.7
(22) Date of filing: 31.07.2008
(51) Int. Cl.: C01G 3/02

(54) **HYDROMETALLURGICAL PROCESS FOR PRODUCING CUPROUS OXIDE**
HYDROMETALLURGISCHES VERFAHREN ZUR HERSTELLUNG VON KUPFEROXID
PROCÉDÉ HYDROMÉTALLURGIQUE POUR LA PRODUCTION D'OXYDE CUIVREUX

(30) Priority: 31.07.2007 EP 07014973; 03.08.2007 US 935277 P
(43) Date of publication of application: 19.05.2010
(73) Proprietor: Umicore, 1000 Bruxelles (BE)
(72) Inventor: AMINIAN, Hossein, Edmonton, Alberta T6X 0A8 (CA); WHITE, Kevin, Edmonton, Alberta T5E 5K4 (CA)
(74) Representative: Pilate, André
(86) International application number: PCT/EP2008/006312
(87) International publication number: WO 2009/015889

(56) References cited:
- US-A- 3 492 115
- US-A1- 2001 002 558
- US-B1- 6 174 344
- US-B1- 6 391 087

## Description

This invention relates to a hydrometallurgical process for producing cuprous oxide as an intermediate in the production of copper powder, using hydrazine as a reducing agent.

Copper reduction by hydrazine is not new, as it has been used by many researchers and companies, for example by Mitsui, to produce spherical copper powder. Copper can be obtained by reduction from copper (+2) or copper (+1); however most hydrazine reduction processes start from cuprous oxide (copper +1). The latter can be reduced easily at moderate temperature, resulting in a more controllable process than hydrazine reduction from copper (+2).

Reduction of cuprous oxide by hydrazine hydrate can be represented by the following simple reaction:

2 Cu₂O + N₂H₄.H₂O → 4 Cu + N₂ + 3 H₂O

The rate of such reduction is controlled either by diffusion of species to or from the boundary layer, or by chemical reduction at the boundary layer.

Mitsui's hydrazine reduction process is disclosed in US6174344 and US6391087. In this process, Cu(OH)₂ is first produced by mixing copper sulfate with sodium hydroxide, and then the copper (+2) is reduced to copper (+1) using sugar. The copper powder is then produced by reducing copper (+1) with hydrazine. A similar process is described in US20010002558.

All these processes comprise complex intermediate steps to produce cuprous oxide (Cu₂O) using a reducing sugar. These steps involve mixing of copper sulfate with sodium hydroxide for making copper hydroxide, heating up the solution to 60°C, adding sugar, keeping the agitation for a few hours, filtering the slurry, and finally reducing the copper hydroxide to cuprous oxide by sugar.

In US3492115, a process is described for the preparation of Cu₂O powder from low-grade Cu cements. After several cleaning steps, the cement is dissolved in an ammoniacal sulfate solution; the obtained solution is reduced using an excess of Cu cement, and filtered; the Cu in the filtrate is then precipitated as Cu₂O, using sulphuric acid. The complete process is carried out in open flotation reactors. This leads to some ammonia losses by evaporation and in the partial re-oxidation of Cu by ambient air. The ensuing lack of precise control results in low reaction yields, in a need for large Cu cement excesses, and in a supplemental filtration step to separate this excess.

The present invention overcomes the above complexity and lack of control by a process comprising the steps of:
- providing a solution of ammonium hydroxide and ammonium sulfate;
- leaching a first quantity of metallic copper with said solution at a temperature of between 25 and 90 °C under a gas atmosphere comprising at least 21 vol.% of oxygen, thereby obtaining a copper (+2) ammoniacal sulfate solution;
- leaching a second quantity of metallic copper with said copper (+2) ammoniacal sulfate solution under a neutral atmosphere, preferably under nitrogen, whereby said copper (+2) solution is converted in a copper (+1) solution; and
- adding sulfuric acid to said copper (+1) solution to a pH between 2 and 7.5, and preferably between 3.5 and 6.5, whereby copper (+1) is precipitated as cuprous oxide.

The reaction scheme is the following:

Cu + 2 NH₃ + (NH₄)₂SO₄ + ½ O₂ → Cu(NH₃)₄SO₄ + H₂O (Reaction 1 - Oxidation)

Cu + Cu(NH₃)₄SO₄ → [Cu(NH₃)]₂SO₄ (Reaction 2 - Reduction)

[Cu(NH₃)₂]₂SO₄ + H₂SO₄ → CuOH + 2 (NH₄)₂SO₄ 2 CuOH → Cu₂O + H₂O (Reaction 3 - Precipitation)

It has been determined that it is essential to perform the second leaching step in a neutral atmosphere (i.e. without oxygen). Operating in an open reactor, such as in a flotation cell, would indeed lead to significant losses of ammonia. Moreover, the presence of air would impede the quantitative conversion of copper (2+) to copper (1+) because of re-oxidation with oxygen, leading to inadequate yields. To ensure a neutral atmosphere in this step, the use of a sealed reactor is preferred.

The cuprous solution is prepared by first leaching metallic copper in the presence of oxygen and ammonium hydroxide to produce a cupric solution (Reaction 1) and then reducing the cupric solution by copper in the absence of oxygen (Reaction 2). Afterwards, sulfuric acid is added to the cuprous solution, leading to the precipitation of cuprous oxide. It is believed that a cuprous hydroxide is formed first, which readily transforms to cuprous oxide, which precipitated (Reaction 3).

If the leaching temperature is lower than 25 °C, the oxidation reaction is too slow. The upper temperature limit avoids boiling over and evaporating the ammonium hydroxide, whereby the process would become difficult to control. If the pH in the precipitation step is lower than 3.5, and especially if lower than 2, some metallic copper will be formed; if the pH is too high, the cuprous oxide formation is inhibited.

In one embodiment, the concentration of both ammonium hydroxide and ammonium sulfate in the starting solution is between 180 and 260 g/l.

In another embodiment, the first quantity of metallic copper is calculated to obtain a copper concentration of between 20 and 80 g/l, and preferably between 55 and 75 g/l in said copper (+2) ammoniacal sulfate solution. Also, preferably the second quantity of metallic copper is calculated to obtain a final copper concentration of between 40 and 160 g/l, and preferably between 100 and 140 g/l in said copper (+1) solution.

In a preferred embodiment, the process further comprises the steps of:
- recovering said cuprous oxide as a slurry by filtration, whereby a filtrate is obtained and separated, and, preferably;
- washing said slurry with water until said filtrate has a pH of 6.5 to 7.

The washing step allows to better control the process. The filtrate, which mainly consists of ammonium sulfate and some copper (+2) sulfate, can be partly recycled to the initial leaching step.

Finally, the process can be continued by reducing said washed slurry into copper powder by reduction with hydrazine at a pH of 7 to 11. This reduction step is well known to the skilled person.

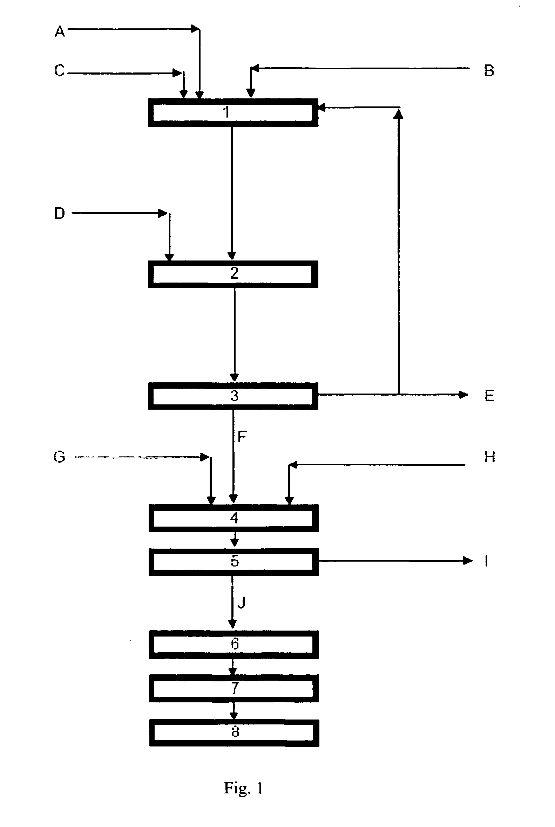

The process flow diagram is shown in Fig. 1. As said before, the process starts with leaching copper shot in a solution of ammonium hydroxide and ammonium sulfate at a temperature up to around 90 °C under an oxygen environment to produce copper (+2) ammoniacal sulfate solution. By introducing nitrogen and continuing leaching copper (+2) is converted to copper (+1).

The copper (+1) solution is then treated with sulfuric acid at a pH of 4 to 6.5 to produce cuprous oxide. The slurry is filtered and then introduced into the hydrazine reduction tank where the pH is adjusted to 7 to 11 with a base, preferably ammonium hydroxide, but other bases like sodium hydroxide can be used. For providing a good dispersion, organic additives like glycine, sorbitol or a polyacrylic based additive like Glascol^{®} E7 are added to an amount from 0.5 to 10 % of the charge. After adjustment of the slurry temperature, the required amount of hydrazine is introduced to reduce cuprous oxide to copper powder.

This invention makes it possible to produce a range of different copper powder particle sizes. These powders can be used for electronic application such as for the terminations in multi-layer capacitors.

The following examples illustrate the invention.

### Example 1

### Copper Solution Preparation

- About 260 liter of leaching solution is prepared in an agitated sealed reactor equipped with a 330 rpm impeller, by addition to about 191 liter water of 59.3 kg ammonium sulfate and 62 liter aqua ammonia at 260 g/l. Air is sparged into the solution during this operation.
- 3.38 g of Glascol^{®} E7 is added to the obtained solution.
- 16.9 kg of copper is leached in this solution, according to Reaction 1 above, yielding a copper concentration of 65 g/l. The reactor is sparged with nitrogen during this operation.
- 15.6 kg of copper is leached in this solution, according to Reaction 2 above, yielding a final copper (1+) concentration of 125 g/l.

### Cuprous Oxide Formation

1 liter of above copper (+1) solution is placed in a 2 liter beaker. The solution is agitated at 500 rpm using a 2", 3-blade plastic impeller located approximately 1 cm from the bottom of the beaker. Then 900 ml of 160 g/l sulphuric acid is added to the beaker at a rate of 150 ml/min until the pH of the slurry is 5.45. The cuprous oxide slurry is filtered on a Buchner filter and washed with water until the pH of the filtrate is 7. The total yield op Cu, towards the formation of Cu₂O, is well over 90%, which is excellent.

### Hydrazine Reduction

The cuprous oxide filter cake from above is repulped in a 4 liter beaker using 2 liter of water. The 4 liter beaker is placed in a water bath. The slurry is agitated using the same plastic impeller used in the cuprous oxide formation. When the temperature of the cuprous oxide slurry reaches 55 °C, the organic additives (1 g of glycine and 2 drops of Glascol^{®} are added to the beaker. Then, 100 ml of hydrazine 35% is added.

After copper powder is formed and there are no further signs of reaction, the copper powder slurry is removed from the beaker. The powder is washed with water, followed by a methanol wash. It is then coated with stearic acid in methanol, and filtered and dried in a vacuum oven under a nitrogen purge. 106 g of copper powder is recovered.

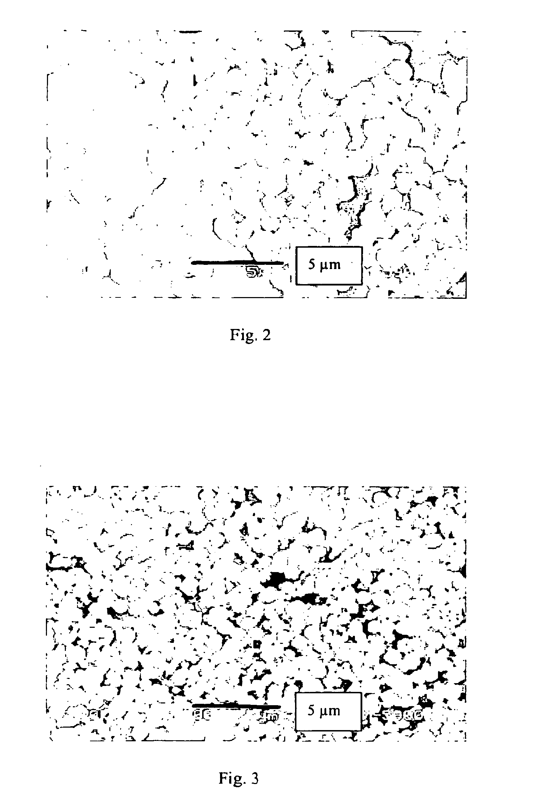

The PSD of the obtained powder is shown in Table 1. Its surface area is 0.65 m²/g. Fig. 2 shows a SEM photography of this copper powder.

**Table 1: Particle size distribution (µm) of copper powder from Example 1**

| | |
|---|---|
| D10% | 2.075 |
| D50% | 4.463 |
| D90% | 8.803 |
| D95% | 10.32 |
| D100% | 14.96 |

### Example 2

This example is carried out as Example 1 described above, except for the following differences:
- the cuprous oxide made from the copper solution is filtered but not washed before being reduced by hydrazine;
- 6 g of sorbitol powder is added to the repulp slurry before reduction.

The PSD of the obtained powder is given in Table 2. Its surface area is 1.08 m²/g. Fig. 3 shows a SEM photography of this copper powder.

**Table 2: Particle size distribution (µm) of copper powder from Example 2**

| | |
|---|---|
| D10% | 0.973 |
| D50% | 1.760 |
| D90% | 3.152 |
| D95% | 3.65 |
| D100% | 5.64 |

### Example 3

This example is carried out as Example 2 described above, except for the following differences:
- the amount of sorbitol is reduced to 4 g;
- the repulp slurry is adjusted to pH 9 using ammonium hydroxide solution before adding hydrazine.

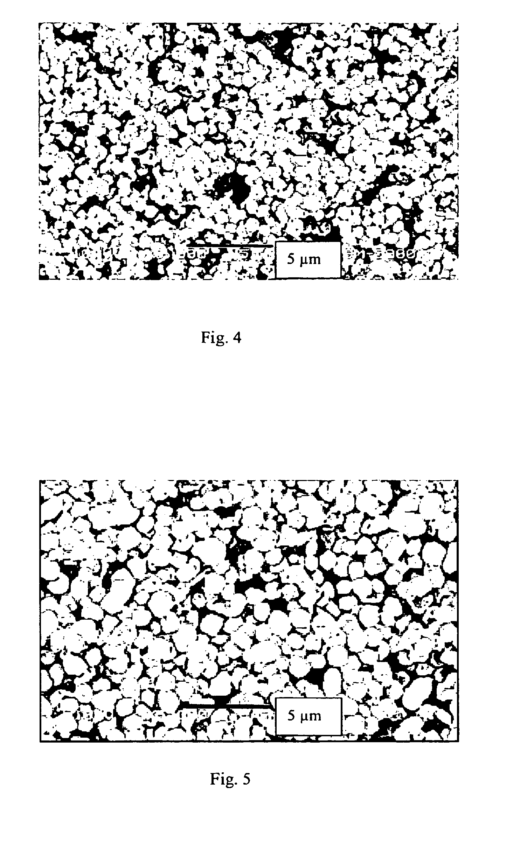

The PSD of the obtained powder is shown in Table 3. Its surface area is 1.19 m²/g. Fig. 4 shows a SEM photography of this copper powder.

**Table 3: Particle size distribution (µm) of copper powder from Example 3**

| | |
|---|---|
| D10% | 1.039 |
| D50% | 2.344 |
| D90% | 5.250 |
| D95% | 6.37 |
| D100% | 11.93 |

### Example 4

### Cuprous Oxide Formation

195 liter of copper (+1) solution (prepared similarly to Example 1) titrating 95 g/l of copper is placed in a 400 liter tank equipped with an impeller rotating at 300 rpm. A solution of sulfuric acid (160 g/l) is added at the rate of 15 l/min until the pH of the slurry reaches 5.5. Approximately 195 liter of sulfuric acid is required. Then the slurry (cuprous oxide) is filtered and washed.

### Hydrazine Reduction

The washed cuprous oxide is reduced with hydrazine to metallic copper according to the following conditions. The pH is adjusted using ammonium hydroxide.

| | |
|---|---|
| Batch volume after adding additives | 150 l |
| Initial temperature | 55 °C |
| Glascol | 40 g |
| Sorbitol | 400 g |
| Glycine | 150 g |
| Agitation rate | 320 rpm |
| pH | 9 |
| Hydrazine (55%) | 10 l |
| Hydrazine addition rate | 6 l/min |

The PSD of the obtained powder is shown in Table 4. Its surface area is 0.73 m²/g and its tap density is 4.59 g/cm³. Residual impurities amount to (in weight %) 0.0051% S, 0.39% O₂, and 0.14% C. Fig. 5 shows a SEM photography of this copper powder.

**Table 4: Particle size distribution (µm) of copper powder from Example 4**

| | |
|---|---|
| D10% | 0.828 |
| D50% | 1.469 |
| D90% | 2.570 |
| D95% | 2.95 |
| D100% | 4.69 |

### Example 5 (comparative)

This example illustrates the use of an open reactor (according to prior art) in the step of leaching a second quantity of metallic instead of a neutral atmosphere (according to the invention).

A 1.5 liter flotation cell is used to run the test. A slurry containing 5% Cu powder is prepared by adding Cu powder in water. To this slurry, ammonia and ammonium sulfate are added according to the ratios of ammonia:Cu 1:1 and ammonium sulfate:Cu 2:1.

After addition of all materials, the total volume of slurry is approximately 1250 ml. The slurry is kept at room temperature and air is sparged into the flotation cell for 2.5 hours. The Cu (2+) bearing solution is then filtered and the filtrate is returned to the cell. The filtrate volume amounts to 1150 ml, indicating a loss by evaporation of 100 ml. From the mass balance, the total Cu concentration is determined to be 34.7 g/l. This corresponds to a leaching yield of 80%, which is acceptable.

The filtered Cu (2+) solution is agitated in the flotation cell without air sparging, and 120 g of copper powder is added. The solution is further agitated for 2 hours. Then, the solution is filtered to remove excess copper powder, which amounts to 100 g. About 1075 ml of Cu (1+) bearing solution is obtained, with a total Cu concentration of 56 g/l.

The Cu (1+) solution is then treated at 80 °C with sulfuric acid to a pH of about 2.5. Only about 19 g of Cu₂O is obtained. Using an open flotation cell, the yield op Cu towards Cu₂O thus amounts to less than 10%, which is unacceptably low.

### List of references related to Figure 1

### Unit operations

- 1.: Leaching and reduction
- 2.: Precipitation
- 3.: Filtration
- 4.: Hydrazine reduction
- 5.: Filtration/Washing
- 6.: Coating
- 7.: Drying
- 8.: Screening/Packaging

### Material streams

- A: Ammonium hydroxide, ammonium sulphate
- B: Water
- C: Metallic copper
- D: Sulfuric acid
- E: Filtrate
- F: Copper (1+) oxide
- G: Glycine
- H: D-Sorbitol, hydrazine, water
- I: Filtrate
- J: Copper powder

## Claims

1. Process for the production of cuprous oxide, comprising the steps of:
- providing a solution of ammonium hydroxide and ammonium sulfate;
- leaching a first quantity of metallic copper with said solution at a temperature of between 25 and 90 °C under a gas atmosphere comprising at least 21 vol.% of oxygen, thereby obtaining a copper (+2) ammoniacal sulfate solution;
- leaching a second quantity of metallic copper with said copper (+2) ammoniacal sulfate solution under a neutral atmosphere, preferably under nitrogen, whereby said copper (+2) solution is converted to a copper (+1) solution; and
- precipitating cuprous oxide at a pH between 2 and 7.5, and preferably between 3.5 and 6.5, by adding sulfuric acid to said copper (+1) solution.

2. Process according to claim 1, whereby the step of leaching a second quantity of metallic copper is performed in a sealed reactor.

3. Process according to claims 1or 2, wherein the concentration of both ammonium hydroxide and ammonium sulfate in said solution is between 180 and 260 g/l.

4. Process according to any one of claims 1 to 3, wherein the first quantity of metallic copper is calculated to obtain a copper concentration of between 20 and 80 g/l, and preferably between 55 and 75 g/l in said copper (+2) ammoniacal sulfate solution.

5. Process according to any one of claims I to 4, wherein the second quantity of metallic copper is calculated to obtain a final copper concentration of between 40 and 160 g/l, and preferably between 100 and 140 g/l in said copper (+1) solution.

6. Process according to any one of claims 1 to 5, further comprising the steps of:
- recovering said cuprous oxide as a slurry by filtration, whereby a filtrate is obtained and separated; and, preferably; and
- washing said slurry with water until said filtrate has a pH of 6.5 to 7.

7. Process according to claim 6, whereby said slurry is further reduced into copper powder by reduction with hydrazine at a pH of 7 to 11.

## Patentansprüche

1. Verfahren zur Herstellung von Kupfer(I)-oxid, bei dem man:
- eine Lösung von Ammoniumhydroxid und Ammoniumsulfat bereitstellt;
- eine erste Menge von metallischem Kupfer bei einer Temperatur zwischen 25 und 90°C unter einer Gasatmosphäre, die mindestens 21 Vol.-% Sauerstoff enthält, mit der Lösung auslaugt, wodurch man eine ammoniakalische Kupfer(+2)-sulfat-Lösung erhält;
- eine zweite Menge von metallischem Kupfer unter einer neutralen Atmosphäre, vorzugsweise unter Stickstoff, mit der ammoniakalischen Kupfer(+2)-sulfat-Lösung auslaugt, wodurch die Kupfer(+2)-Lösung in eine Kupfer(+1)-Lösung umgewandelt wird; und
- durch Zugabe von Schwefelsäure zu der Kupfer(+1)-Lösung bei einem pH-Wert zwischen 2 und 7,5 und vorzugsweise zwischen 3,5 und 6,5 Kupfer(I)-oxid ausfällt.

2. Verfahren nach Anspruch 1, bei dem man den Schritt des Auslaugens einer zweiten Menge von metallischem Kupfer in einem geschlossenen Reaktor durchführt.

3. Verfahren nach Anspruch 1 oder 2, bei dem die Konzentration von sowohl Ammoniumhydroxid als auch Ammoniumsulfat in der Lösung zwischen 180 und 260 g/l liegt.

4. Verfahren nach einem der Ansprüche 1 bis 3, bei dem man die erste Menge von metallischem Kupfer so berechnet, daß sich eine Kupferkonzentration in der ammoniakalischen Kupfer(+2)-sulfat-Lösung zwischen 20 und 80 g/l und vorzugsweise zwischen 55 und 75 g/l ergibt.

5. Verfahren nach einem der Ansprüche 1 bis 4, bei dem man die zweite Menge von metallischem Kupfer so berechnet, daß sich eine Kupferendkonzentration in der Kupfer(+1)-Lösung zwischen 40 und 160 g/l und vorzugsweise zwischen 100 und 140 g/l ergibt.

6. Verfahren nach einem der Ansprüche 1 bis 5, bei dem man ferner:
- das Kupfer(I)-oxid in Form einer Aufschlämmung durch Filtration gewinnt, wobei man ein Filtrat erhält und abtrennt und vorzugsweise
- die Aufschlämmung mit Wasser wäscht, bis das Filtrat einen pH-Wert von 6,5 bis 7 aufweist.

7. Verfahren nach Anspruch 6, bei dem man die Aufschlämmung durch Reduktion mit Hydrazin bei einem pH-Wert von 7 bis 11 weiter zu Kupferpulver reduziert.

## Revendications

1. Procédé de fabrication d'oxyde cuivreux, comprenant les étapes suivantes :
- la mise à disposition d'une solution d'hydroxyde d'ammonium et de sulfate d'ammonium ;
- la lixiviation d'une première quantité de cuivre métallique avec ladite solution à une température comprise entre 25 et 90 °C sous une atmosphère gazeuse comprenant au moins 21 % en volume d'oxygène pour obtenir une solution ammoniacale de sulfate de cuivre (+2) ;
- la lixiviation d'une seconde quantité de cuivre métallique avec ladite solution ammoniacale de sulfate de cuivre (+2) sous une atmosphère neutre, de préférence sous azote, ladite solution de cuivre (+2) étant transformée en une solution de cuivre (+1) ; et
- la précipitation d'oxyde cuivreux à un pH compris entre 2 et 7,5, et de préférence entre 3,5 et 6,5, en ajoutant de l'acide sulfurique à ladite solution de cuivre (+1).

2. Procédé selon la revendication 1, dans lequel l'étape de lixiviation d'une seconde quantité de cuivre métallique est réalisée dans un réacteur fermé.

3. Procédé selon les revendications 1 ou 2, dans lequel la concentration de l'hydroxyde d'ammonium et du sulfate d'ammonium dans ladite solution est comprise entre 180 et 260 g/l.

4. Procédé selon l'une quelconque des revendications 1 à 3, dans lequel la première quantité de cuivre métallique est calculée pour obtenir une concentration de cuivre comprise entre 20 et 80 g/l, et de préférence entre 55 et 75 g/l, dans ladite solution ammoniacale de sulfate de cuivre (+2).

5. Procédé selon l'une quelconque des revendications 1 à 4, dans lequel la seconde quantité de cuivre métallique est calculée pour obtenir une concentration de cuivre finale comprise entre 40 et 160 g/l, et de préférence entre 100 et 140 g/l, dans ladite solution de cuivre (+1).

6. Procédé selon l'une quelconque des revendications 1 à 5, comprenant également les étapes suivantes :
- la récupération dudit oxyde cuivreux sous la forme d'une pâte par filtration, un filtrat étant ainsi obtenu et séparé ; et, de préférence ;
- le lavage de ladite pâte avec de l'eau jusqu'à ce que ledit filtrat ait un pH de 6,5 à 7.

7. Procédé selon la revendication 6, dans lequel ladite pâte est encore réduite en une poudre de cuivre par réduction avec de l'hydrazine à un pH de 7 à 11.
